# EUROPEAN PATENT SPECIFICATION

(11) **EP 1 486 283 B1**
(45) Date of publication and mention of the grant of the patent: **11.04.2007**
(21) Application number: 04253466.9
(22) Date of filing: 10.06.2004
(51) Int. Cl.: B23K 9/00, B23K 9/025, B23K 9/032, B23K 26/30, B23K 37/04, B23K 9/127, G05B 19/401, G06T 7/00, G01B 11/00, G01B 11/25, B63B 3/14, B23K 26/03

(54) **Method of controlling the welding of a three-dimensional construction by taking a two-dimensional image of the construction and adjusting in real time in the third dimension**
Verfahren zur Steuerung des Schweissens einer dreidimensionalen Struktur mit Aufnehmung von einem zweidimensionalen Bild der Struktur und mit Echtzeit-Justirien in der dritten Dimension
Méthode de contrôle du soudage d'une construction tridimensionelle en prenant une image bidimensionelle de la construction et en ajustant en temps réel suivant la troisième dimension

(30) Priority: 12.06.2003 FI 20030883
(43) Date of publication of application: 15.12.2004
(73) Proprietor: Aker Yards Oy, 20240 Turku (FI)
(72) Inventor: Gustafsson, Jukka, 23100 Mynämäki (FI); Veikkolainen, Mikko, 02180 Espoo (FI)
(74) Representative: Gustafsson, Aulis Valdemar

(56) References cited:
- EP-A- 0 520 894
- EP-A- 1 188 510
- US-A- 3 708 100
- US-A- 4 827 099
- US-B1- 6 226 395
- PATENT ABSTRACTS OF JAPAN vol. 1997, no. 10, 31 October 1997 (1997-10-31) & JP 9 155579 A (SHIP & OZEAN ZAIDAN), 17 June 1997 (1997-06-17)

## Description

The invention relates to a method of controlling welding in a three-dimensional X-Y-Z coordinate system in accordance with the preamble of claim 1 (see, for example, US-A-6 226 395).

Especially in shipbuilding, robotized welding of shaped pieces has not been possible in practical production, due on one hand to programming problems and, on the other hand, to the accuracy of manufacture. In practice, the dimensional accuracy of the piece and its positioning accuracy have not reached a sufficiently high level for the robotizing to be based for instance on the information obtained from the design system. Efforts have been made to solve the problems by specifying the manufacture of components and the positioning accuracy and by developing programming systems based e.g. on simulation. However, serious problems have been encountered both in the technical realization and in the expense.

FI 20001907 discloses a method of flat welding of pieces utilizing a welding robot and an artificial vision system. Thus, the construction to be welded, which is arranged on a support surface, is first photographed and then, on the basis of the produced picture map, the points to be welded, and the welding parameters related thereto, are identified and determined, and said parameters are passed to the welding machine so as to control the welding. Also programmable macro programs may preferably be utilized in the welding. This method is advantageous in itself, but it is not as such applicable to the welding of three-dimensional curved pieces.

US 5,999,642 discloses a method and an arrangement for photographing a three-dimensional structure for welding. In the method, the construction is photographed by scanning it with a sufficient number of cameras and/or from several angles so as to fully define the construction to be welded and subsequently, the constructional information is passed to a welding program, which controls a welding robot. Thus, complete visual information on the whole three-dimensional structure is produced and by means of that information the operation of the welding robot is controlled in the real world. Thus, the method relates in the first place to a mathematical model of the construction to be welded, produced for a computer memory. It is laborious and its image processing is complicated, and therefore the method is as a whole quite time-consuming and inaccuracies related to the practical welding process cannot be avoided by using this method.

US-B-6,226,395 discloses a method in which the workpiece is scanned in order to create a 3 -dimensional mathematical model of the workpiece. The controller breaks the model down into planes, identifying planes that intersect, and selects the line of intersection of the two planes as a welding line. The workpiece is then welded along the welding line.

The document Patent Abstracts of Japan vol. 1997, no. 10, discloses a method of controlling movement of a heating torch used in automatic heat bending equipment to bend a hull shell plate to a desired configuration. Styluses carried by a transit truck detect change in the inclination of the shell plate relative to horizontal as the heating torch moves over the plate in accordance with a desired heating pattern. Movement of the styluses is detected by potentiometers and the output signals of the potentiometers are supplied to an operation means which controls motors for adjusting the vertical height and orientation of the heating torch. As a consequence this method requires contact of the styluses to the welding structure.

According to EP-A-0520894 laser sensing is used for measuring welding parameters, but it relates to welding in a 2 -dimensional X-Y welding plane only. Thus it does not measure the Z -axis position of a structure arranged on a 3 -dimensional support base to provide for control of the welding equipment in the direction of the Z -axis.

An aim of the present invention is to provide a novel method, as simple and as easily feasible as possible, of welding a three-dimensional structure by using a welding robot or the like, whereby the disadvantages related to said known methods are eliminated.

The present invention provides a method of controlling welding according to claim 1. Preferred or optional features of the invention are defined in the other claims. According to the invention, the welding is performed so that the control of the welding equipment in the X-Y plane is based on a picture map provided and control data determined on the basis thereof, and the level of the surface to be welded in the direction of the Z-axis, i.e. the vertical axis, of the coordinate system is measured continuously and the level information thus determined is passed to the welding equipment control system so as to control the welding equipment in real time also in the direction of the Z-axis. According to the invention it is sufficient to obtain two-dimensional visual information on the shaped pieces in order to provide a basis for the control of the welding equipment, i.e. a welding robot or a manipulator, to be completed by real-time vertical measuring and adjustment. Thus, the curved surfaces of the construction to be welded may be plane-projected for the welding robot and no complicated photographing of the three-dimensional structure is needed in advance.

Laser pointing directed at the surface to be welded is used for measuring the level, whereby the laser pointing is monitored in real time by camera means, which provide information on the basis of which the current level of the surface to be welded is determined. Preferably, three laser pointers are used for the laser pointing, which pointers are directed so that they intersect and their beams provide three points. Said measuring points are photographed by the camera means and based on the acquired visual information the current level of the surface to be welded is determined by calculation on the basis of the change of the mutual distance between said measuring points. The control data for the Z-axis are preferably calculated over a longer distance in order to avoid incorrect information produced by the intersecting structures possibly existing in the object to be welded.

For measuring the level of the surface to be welded the camera means are preferably attached to the same carriage as a robot and the welding equipment. The control itself in the direction of Z-axis may be performed independently, whereby it operates in parallel with the control of the welding robot, or it may be integrated with the control of the robot.

Said level information is passed to the welding equipment control system, which is arranged to keep the distance of the welding equipment from the surface to be welded constant. In addition, the control of the welding equipment may be assisted by weld groove monitoring for instance through the welding arc, or by optical weld groove monitoring, for correcting small errors in the positioning of the welding equipment.

Lighting fixtures provided with a dimmer are preferably used for equalizing the lighting conditions. Thus, the effect of changes in the lighting conditions on establishing the picture map may be eliminated as efficiently as possible.

The method is especially applicable to robotized welding of shaped pieces in watercraft.

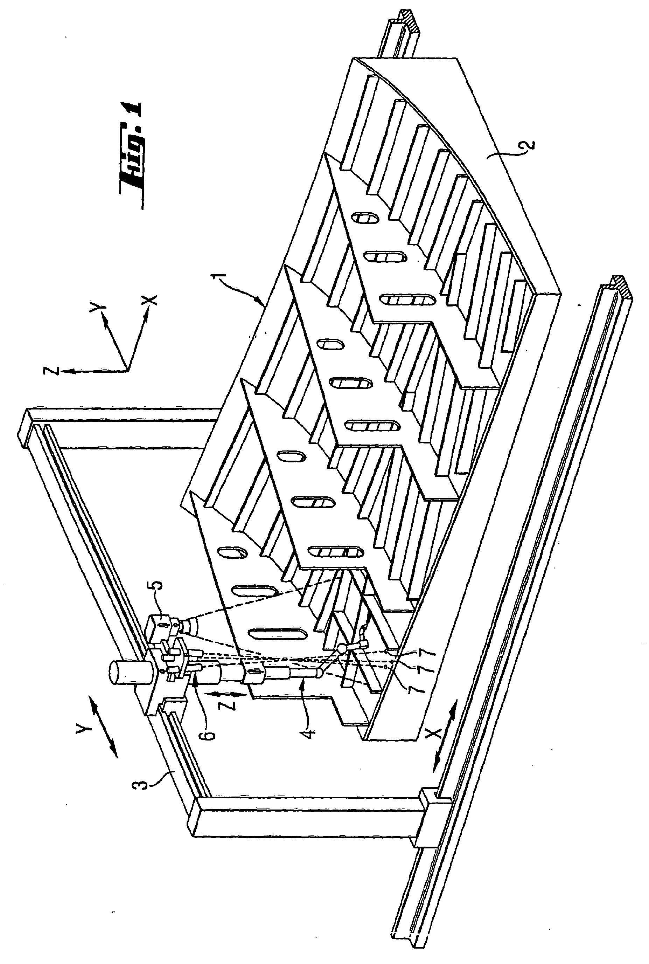

The invention will now be described, by way of example only, with reference to the attached drawings, in which
Figure 1 depicts the principle of one robotized welding arrangement applying the method according to the invention; and
Figure 2 illustrates the ranging system based on laser pointers applied in the method according to the invention.

In the figures the reference numeral 1 indicates a construction to be welded, which in this case is a shaped piece used in shipbuilding and has a plurality of both longitudinal and transverse support structures, an essential part of which can be welded by means of a controllable robot. The shaped piece 1 is placed on a support base 2, which is located within the working area of a robot portal 3. A welding robot 4 is located on the robot portal 3 and in addition, the system comprises camera means 5. The robot portal 3 is in practice arranged on a rail path and is thus movable with respect to the working area. There may, if required, be several robot portals on the same rail path and each portal may have one or two welding robots 4. The welding robots 4 need to be movable within the working area in all of the X-, Y- and Z-directions.

The camera means 5 may comprise one or several cameras, e.g. digital cameras, and they may be located in various ways, for instance on the portal itself, in conjunction with the welding equipment or separate from it, or in the structures surrounding the portal. Depending on the lighting conditions, the system may also include a number of lighting fixtures, e.g. halogen lamps (not shown), which are preferably provided with dimmers so that the prevailing lighting conditions may be kept as constant as possible in order to ensure a successful photographic outcome.

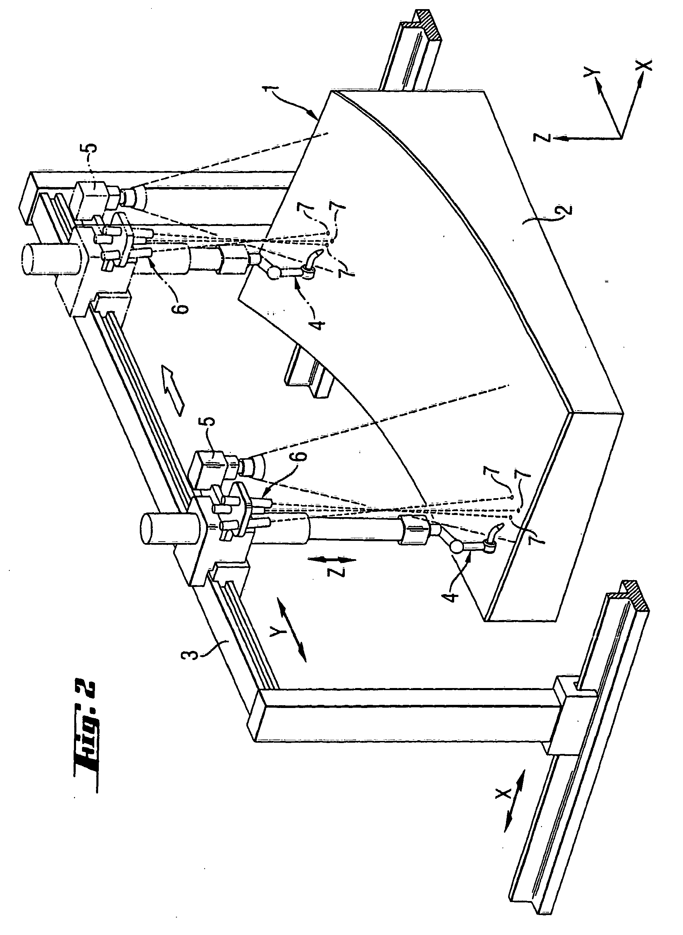

Due to curved and double-curved surface forms the method according to the invention also requires an applicable system for vertical ranging, which is illustrated in Fig 2. The ranging is preferably based on three laser pointers 6, which are directed so that they intersect and their beams form a triangle consisting of three points 7 on the surface of the shaped piece 1. Since the level and posture of the surface change as the plate field curves, also the mutual distance between the points of the laser beams changes. The measuring points 7 are photographed continuously by the camera means 5, which is preferably arranged on the same carriage as the welding robot. The camera used for the ranging may, if required, be separate from the camera means used for general photographing of the construction 1. On the basis of the change of the mutual distance between the measuring points the current level of the surface to be welded is determined by calculation. The ranging system is used for controlling the welding robot in the vertical direction, i.e. in the direction of Z-axis. Due to the level control in real time the curved surfaces may, from the viewpoint of the robot, be made to appear planar, whereby two-dimensional control data and a robotized welding system developed for planar pieces is preferably applied to three-dimensional pieces.

The control data for the Z-axis are preferably calculated over a longer distance in order to avoid incorrect information produced by the intersecting structures. The control along the Z-axis may be independent, so that it operates in parallel with the control of the welding robot, or it may be integrated with the control of the welding robot, so that it operates under the control of the welding robot.

The operational principle of the method according to the invention is basically as follows. A shaped piece, wherein profile sections are attached to a curved sheet panel by tack welds, is positioned on a support base in the working area of the welding robot. The working area is photographed by camera means, and appropriate lighting may be utilized, where required, for facilitating the identification. The welding performed by the welding robot is based on pre-programmed macro programs, the input data of which consist of the formal data provided by the camera means. At its simplest a so-called skeleton image of the shaped piece in the X-Y plane is formed, where specific welding points are identified and appropriate weld types with welding parameters are selected therefor. An operator performs the programming of the welding robot. The welding robot may start the welding once the first weld has been determined. The control of the welding in the direction of Z-axis is performed by real-time level monitoring as is described in the above, whereby the level control system keeps the distance of the welding robot from the surface to be welded constant.

In the welding, seam tracking may also be utilized for correcting minor errors in the positioning of the robot's welding head. The seam tracking may be performed for instance so that the welding current varies according to the length of free wire, when welding with constant voltage (MIG/MAG) is concerned. In the seam tracking through the arc, when the seam is welded by using an oscillation mechanism, the welding current is equally strong for both faces at the same point, if the seam is symmetrical. When the distance of the welding head from the fusion face of the seam varies, the welding current is not equally strong, and these values are measured and the path is changed in the seam tracking in order to make the possibly deviating current values equal.

A substantial advantage of the method according to the invention is the fact that the Z-coordinate lacking in the camera image at the programming stage does need to be given or determined by calculation.

The invention is not limited to the above-described application, but several modifications are conceivable within the scope of the appended claims.

## Claims

1. A method of controlling welding in a three-dimensional X-Y-Z coordinate system, in which method a welded structure is provided by a number of pieces arranged on a three-dimensional support base (2) in an assembly in accordance with the construction (1) to be welded, the construction (1) to be welded is photographed and a picture map is made of the construction (1), by means of which picture map the weld points of the construction are identified and welding parameters are determined therefor, especially the starting point and the weld type as well as the welding method to be used, and these control data are passed to a welding equipment control system, **characterised in that** the welding is performed so that the control of the welding equipment in the X-Y plane is based on said picture map and said control data, and that the level of the surface to be welded in the direction of the Z-axis, i.e. the vertical axis, in the coordinate system is measured continuously by means of laser pointing (6) directed at the surface to be welded for measuring the level, whereby the laser pointing (6) is monitored in real time by camera means (5), which provide information on the basis of which the current level of the surface to be welded is determined, and the level information thus determined is passed to the welding equipment control system so as to control the welding equipment in real time also in the direction of the Z-axis.

2. A method according to claim 1, **characterised in that** three laser pointers (6) are used for the laser pointing, which pointers (6) are directed so that they intersect and their beams provide three points (7), and that said measuring points are photographed by the camera means (5) and based on the acquired visual information the current level of the surface to be welded is determined by calculation on the basis of the change of the mutual distance between said measuring points (7).

3. A method according to any one of the preceding claims, **characterised in that** for measuring the level of the surface to be welded the camera means (5) are attached to the same carriage as a welding robot (4) provided with the welding equipment.

4. A method according to any one of the preceding claims, **characterised in that** said level information is passed to the welding equipment control system, which system is arranged to keep the distance of the welding equipment from the surface to be welded constant.

5. A method according to any one of the preceding claims, **characterised in that** the control of the welding equipment is assisted by weld groove monitoring for instance through the welding arc or by optical weld groove monitoring for correcting small errors in the positioning of the welding equipment.

6. A method according to any one of the preceding claims, **characterised in that** lighting fixtures provided with a dimmer are used for equalizing the lighting conditions.

7. A method according to any one of the preceding claims, **characterised in that** the method is applied to robotized welding of shaped pieces in watercraft.

## Patentansprüche

1. Verfahren zum Steuern eines Schweißvorgangs in einem dreidimensionalen X-Y-Z-Koordinatensystem, in welchem Verfahren eine geschweißte Struktur aus einer Mehrzahl von Teilen geschaffen wird, die auf einer dreidimensionalen Trägerbasis (2) in einer Zusammensetzung gemäß der zu schweißenden Konstruktion (1) angeordnet werden, wobei die zu schweißende Konstruktion (1) fotografiert wird und eine Bildkarte von der zu fertigenden Konstruktion (1) angefertigt wird, mittels welcher Bildkarte die Schweißpunkte der Konstruktion identifiziert und Schweißparameter hierfür bestimmt werden, insbesondere der Startpunkt und der Schweißtyp, wie auch das anzuwendende Schweißverfahren, und wobei diese Steuerdaten an ein Steuersystem der Schweißausrüstung gegeben werden,
**dadurch gekennzeichnet, dass** der Schweißvorgang ausgeführt wird, derart, dass die Steuerung der Schweißausrüstung in der X-Y-Ebene auf der Grundlage der Bildkarte und den Steuerdaten erfolgt, und dass das Level der zu schweißenden Fläche in der Richtung der Z-Achse, d.h. der Vertikalachse in dem Koordinatensystem mit Hilfe eines Laser-Zeigers (6) kontinuierlich gemessen wird, der zum Messen des Levels auf die zu schweißende Fläche gerichtet ist, wobei der Laserzeiger (6) in Echtzeit mittels einer Kameravorrichtung (5) überwacht wird, die eine Information bereitstellt, auf deren Grundlage das gegenwärtige Level der zu schweißenden Fläche bestimmt wird, und wobei die somit bestimmte Level-Information an das Steuersystem der Schweiß-Ausrüstung gegeben wird, um so die Schweißausrüstung in Echtzeit auch in der Richtung der Z-Achse zu steuern.

2. Verfahren nach Anspruch 1,
**dadurch gekennzeichnet, dass** drei Laserzeiger (6) als Laserzeiger verwendet werden, welche Zeiger (6) derart ausgerichtet sind, dass sie sich schneiden und ihre Strahlen drei Punkte (7) vorsehen, und dass diese Messpunkte von der Kameravorrichtung (5) fotografiert werden, und auf der Grundlage der erhaltenen visuellen Information der gegenwärtige Level der zu schweißenden Fläche durch Berechnung auf der Grundlage der Änderung des gegenseitigen Abstands zwischen diesen Messpunkten (7) bestimmt wird.

3. Verfahren nach einem der vorangehenden Ansprüche,
**dadurch gekennzeichnet, dass** die Kameravorrichtung (5) zum Messen des Levels der zu schweißenden Fläche auf demselben Schlitten wie ein Schweiß-Roboter (4) befestigt ist, der in der Schweißausrüstung enthalten ist.

4. Verfahren nach einem der vorangehenden Ansprüche,
**dadurch gekennzeichnet, dass** die Level-Information an das Steuersystem der Schweißausrüstung gegeben wird, welches System dazu bestimmt ist, die Distanz der Schweißausrüstung von der zu schweißenden Fläche konstant zu halten.

5. Verfahren gemäß einem der vorangehenden Ansprüche,
**dadurch gekennzeichnet, dass** die Steuerung der Schweißausrüstung unterstützt wird durch eine Schweißnaht-Überwachung, durch beispielsweise den Schweißbogen oder durch ein optisches Schweißnaht-Überwachungssystem, um geringfügige Fehler bei der Positionierung der Schweißausrüstung zu korrigieren.

6. Verfahren gemäß einem der vorangehenden Ansprüche,
**dadurch gekennzeichnet, dass** Beleuchtungseinrichtungen, die mit einem Dimmer versehen sind, zum Ausgleichen der Lichtbedingungen verwendet werden.

7. Verfahren nach einem der vorangehenden Ansprüche,
**dadurch gekennzeichnet, dass** das Verfahren auf ein automatisiertes Schweißen mittels Roboter von Formstücken für Wasserfahrzeuge angewendet wird.

## Revendications

1. Procédé de commande de soudage dans un système tridimensionnel de coordonnées X, Y, Z, dans lequel procédé une structure soudée est mise à disposition grâce à un certain nombre de pièces agencées sur une base d'appui tridimensionnelle (2) dans un assemblage conformément à la construction (1) à souder, la construction à souder étant photographiée et une carte photographique de la construction (1) étant réalisée, ladite carte photographique permettant d'identifier les points de soudure de la construction et de déterminer les paramètres de soudage pour celle-ci, en particulier le point de départ et le type de soudure ainsi que le procédé de soudage à utiliser, et ces données de commande sont transmises à un système de commande de l'équipement de soudage, **caractérisé en ce que** le soudage est accompli de sorte que la commande de l'équipement de soudage sur le plan X, Y soit basée sur ladite carte photographique et lesdites données de commande, et **en ce que** le niveau de la surface à souder dans la direction de l'axe Z, c'est-à-dire l'axe vertical, dans le système de coordonnées soit mesuré continuellement au moyen d'un pointage laser (6) dirigé vers la surface soudée pour mesurer le niveau, moyennant quoi le pointage laser (6) est contrôlé en temps réel par des moyens formant appareil photographique (5), qui fournissent des informations sur la base desquelles le niveau actuel de la surface à souder est déterminé, et les informations de niveau ainsi déterminées sont transmises au système de commande de l'équipement de soudage afin de commander l'équipement de soudage en temps réel également dans la direction de l'axe Z.

2. Procédé selon la revendication 1, **caractérisé en ce que** trois pointeurs laser (6) sont utilisés pour le pointage laser, lesquels pointeurs (6) sont dirigés de façon à ce qu'ils se coupent et à ce que leurs faisceaux fournissent trois points (7), et **en ce que** lesdits points de mesure sont photographiés par les moyens formant appareil photographique (5) et sur la base des informations visuelles acquises, le niveau de courant de la surface à souder est déterminé par calcul sur la base du changement de distance mutuelle entre lesdits points de mesure (7).

3. Procédé selon l'une quelconque des revendications précédentes, **caractérisé en ce que** pour mesurer le niveau de la surface à souder, des moyens formant appareil photographique (5) sont attachés à la même plateforme qu'un robot de soudage (4) équipé de l'équipement de soudage.

4. Procédé selon l'une quelconque des revendications précédentes, **caractérisé en ce que** lesdites informations de niveau sont transmises au système de commande de l'équipement de soudage, lequel système est agencé de façon à maintenir constante la distance entre l'équipement de soudage et la surface à souder.

5. Procédé selon l'une quelconque des revendications précédentes, **caractérisé en ce que** la commande de l'équipement de soudage est assistée d'un contrôle de chanfrein par exemple par l'intermédiaire de l'arc de soudage ou d'un contrôle de chanfrein optique pour corriger de petites erreurs dans le positionnement de l'équipement de soudage.

6. Procédé selon l'une quelconque des revendications précédentes, **caractérisé en ce que** des dispositifs d'éclairage équipés d'un variateur de lumière sont utilisés pour égaliser des conditions d'éclairage.

7. Procédé selon l'une quelconque des revendications précédentes, **caractérisé en ce que** le procédé est appliqué à un soudage robotisé de pièces profilées d'un navire.
